# EUROPEAN PATENT APPLICATION

(11) **EP 4 455 636 A1**
(43) Date of publication of application: **30.10.2024**
(21) Application number: 22908834.9
(22) Date of filing: 17.10.2022
(51) Int. Cl.: G01N 21/01, G01N 21/27, G01N 35/00

(54) **AUTOMATED ANALYZING DEVICE, AND METHOD FOR DETERMINING SERVICE LIFE OF LIGHT SOURCE LAMP**

(30) Priority: 23.12.2021 JP 2021208935
(71) Applicant: HITACHI HIGH-TECH CORPORATION, Tokyo 105-6409 (JP)
(72) Inventor: KAWATO Kumiko, Tokyo 105-6409 (JP); KAWAHARA Tetsuji, Tokyo 105-6409 (JP); SHICHIJI Masaru, Tokyo 105-6409 (JP); HIRAMA Hiromi, Tokyo 105-6409 (JP)
(74) Representative: MERH-IP Matias Erny Reichl Hoffmann Patentanwälte PartG mbB
(86) International application number: PCT/JP2022/038568
(87) International publication number: WO 2023/119813

(57) **Abstract**

Provided is a technology for detecting that the service life of a light source lamp is approaching, before an unstable state, in which the light intensity of the light source lamp fluctuates greatly. The present disclosure proposes an automated analyzing device comprising a light source lamp, an optical detector for detecting light emitted from the light source lamp, and a control device for processing a detection signal from the light detector and for calculating a light absorbency of the light, wherein the control device acquires a change over time in the light absorbency, and determines that the service life of the light source lamp is approaching if a trend of the change over time in the light absorbency changes (see Fig. 4).

## Description

### Technical Field

The present invention relates to an automated analysis device and a method of determining a service life of a light source lamp.

### Background Art

Biochemical automated analysis devices that perform component analysis of biological samples such as blood sera and urine are known. Biochemical automated analysis devices cause test samples to react with reagents in reaction containers and optically measure changes in color tones or changes in cloudiness made by the reaction at given time intervals by photometric units such as spectrophotometers. Here, an amount of light of a light source lamp used for the photometric unit gradually decreases from use start and the amount of light greatly changes immediately before end of lifespan (disconnection) (see PTL 1).

### Citation List

### Patent Literature

PTL 1: JP2017-129460A

### Summary of Invention

### Technical Problem

In PTL 1, disorder of an amount of light immediately before end of the lifespan (disconnection) of the light source lamp is detected. When an amount of light of the light source lamp greatly changes, a variation in measured absorbance increases. Measurement in a state in which the amount of light varies greatly may result in an inaccurate measurement result.

Accordingly, the present invention provides a technology for detecting that a lifespan of a light source lamp is approaching the end before reaching an unstable state in which an amount of light of the light source lamp greatly changes.

### Solution to Problem

To solve the foregoing problem, according to an aspect of the present invention, an automated analysis device includes: a light source lamp; an optical detector configured to detect light emitted from the light source lamp; and a control device configured to process a detection signal of the ,optical detector and calculate absorbance of the light. The control device acquires a change in the absorbance over time and determines that a lifespan of the light source lamp is approaching the end when a tendency of the change in the absorbance over time changes.

Further features according to the present disclosure will be apparent from description of the present application and the appended drawings. Modes of the present disclosure are implemented by elements, combinations of various elements, the following detailed descriptions, and aspects of the appended claims. The description of the present application is merely a general example, and the claims or applied examples of the present disclosure are not limited in any sense.

### Advantageous Effects of Invention

According to the technology of the present disclosure, it is possible to detect that a lifespan of a light source lamp is approaching the end before reaching an unstable state in which an amount of light of the light source lamp greatly changes. Other tasks, configurations, advantageous effects are apparent in description of the following embodiments.

### Brief Description of Drawings

[Fig. 1] Fig. 1 is a schematic diagram illustrating a configuration of an automated analysis device.
[Fig. 2] Fig. 2 is a graph illustrating an example of a change in water blank absorbance over time.
[Fig. 3] Fig. 3 is a graph in which an inclination of the graph of Fig. 2 is calculated and plotted.
[Fig. 4] Fig. 4 is a flowchart illustrating a method of determining a lifespan of a light source lamp according to a first embodiment.
[Fig. 5] Fig. 5 is a diagram illustrating an example of a measurement condition setting screen according to the first embodiment.
'[Fig. 6] Fig. 6 is a graph illustrating an example of a change in water blank absorbance over time when maintenance work is performed at a lighting time of 1500 hours.
[Fig. 7] Fig. 7 is a graph illustrating an example of a change in water blank absorbance over time.
[Fig. 8] Fig. 8 is a graph illustrating an inclination of the graph of Fig. 7 that is calculated and plotted.
[Fig. 9] Fig. 9 is a flowchart illustrating a method of determining a lifespan of a light source lamp according to a second embodiment.
[Fig. 10] Fig. 10 is a diagram illustrating an example of a measurement condition setting screen according to the second embodiment.
[Fig. 11] Fig. 11 is a functional block diagram illustrating a learning device according to a third embodiment.
[Fig. 12A] Fig. 12A is a diagram illustrating an example of data included in a maintenance history.
[Fig. 12B] Fig. 12B is a diagram illustrating an example of data included in alarm information.
[Fig. 13] Fig. 13 is a diagram illustrating an example of a learning model by a neural network.
[Fig. 14] Fig. 14 is a diagram illustrating an example of a recommended action display screen.

### Description of Embodiments

### [First Embodiment]

### <Configuration Example of Automated Analyzing Device>

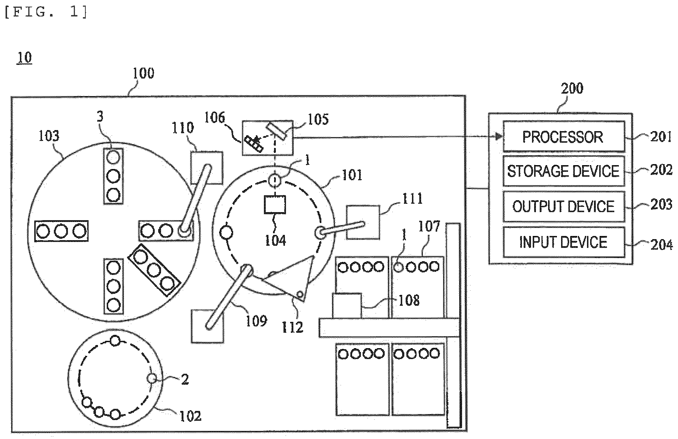

Fig. 1 is a schematic diagram illustrating a configuration of an automated analysis device 10 according to a first embodiment. As illustrated in Fig. 1, the automated analysis device 10 includes a device body 100 and a control device 200. The device body 100 includes a reaction disk 101, a sample disk 102, a reagent disk 103, a light source lamp 104, a spectroscopic diffraction grating 105, a sensor 106, a reaction container reception unit 107, a transport device 108, a sample dispensing mechanism 109, a reagent dispensing mechanism 110, an agitation mechanism 111, and a cleaning mechanism 112.

The reaction disk 101 is configured to be able to rotate and holds a plurality of reaction containers 1 along a circumferential direction. A sample and a reagent are dispensed to the reaction container 1. Although not illustrated, the reaction disk 101 is installed in a reaction vessel, and the reaction containers 1 are dipped in a circulating water of which temperature is controlled in the reaction vessel. The reagent disk 102 is configured to be able to rotate and holds a plurality of sample containers 2 along a circumferential direction. The sample container 2 contains a biological sample such as blood or urine. The reagent disk 103 is configured to be able to rotate and holds a plurality of reagent containers 3 radially. The reagent container 3 contains various reagents used for analyzing a sample.

The light source lamp 104, the spectroscopic diffraction grating 105, and the sensor 106 are included in a photometer. The light source lamp 104 irradiates one of the reaction containers 1 held in the reaction disk 101 with light. The light transmitted through the reaction container 1 is dispersed into each wavelength component by the spectroscopic diffraction grating 105. In a spectroscopic destination, a necessary number of sensors 106 are provided. The sensor 106 is disposed at a position corresponding to a wavelength necessary for measurement. The sensor 106 performs photoelectric conversion on incident light to generate a current proportional to an amount of light, that is, the number of photons. The current is called an optical current. To obtain an electric signal proportional to concentration of a measurement target component included in the sample, the optical current is converted into a digital value by an A/D conversion unit (not illustrated). The digital value is output as a detection result of the sensor 106 to the control device 200.

The reaction container reception unit 107 stores a plurality of unused reaction containers 1. The transport device 108 holds the reaction containers 1 and includes an actuator that can be moved in three axis directions. The transport device 108 transports the reaction containers 1 stored in the reaction container reception unit 107 to the reaction disk 101.

The sample dispensing mechanism 109 and the reagent dispensing mechanism 110 drive probes installed in arms rotating about rotation shafts and perform suction and ejection operations. The sample dispensing mechanism 109 dispenses a sample from the sample container 2 to the reaction container 1. The reagent dispensing mechanism 110 dispenses a reagent from the reagent container 3 to the reaction container 1. The agitation mechanism 111 drives a probe installed in an arm rotating about a rotation shaft and agitates the sample and the reagent dispensed to the reaction container 1. The cleaning mechanism 112 includes a suction mechanism, a detergent ejection mechanism, a water ejection mechanism, and a drying mechanism (none of which is illustrated) and is configured to be able to clean and dry the reaction container 1.

The control device 200 is, for example, a computer device and includes a processor 201, a storage device 202, an output device 203, and an input device 204. The control device 200 controls an operation of the entire automated analysis device 10. The control device 200 receives a detection signal from the photometer and analyzes a measurement target substance of a sample.

The processor 201 is configured with, for example, a processing device such as a CPU, an MPU, or a GPU. The processor 201 controls an operation of each component of the automated analysis device 10. The processor 201 calculates absorbance from a detection result (photometric data) of the photometer. The storage device 202 is configured with, for example, a built-in or externally connected storage device such as a memory and a storage. The storage device 202 stores a program, various parameters, photometric data, and the like necessary for an operation of the automated analysis device 10. The output device 203 is configured with, for example, a display, a touch panel, a printer, a speaker, or the like. The input device 204 is configured with, for example, a keyboard, a mouse, a microphone, a touch panel, or the like. The processor 201, the storage device 202, the output device 203, and the input device 204 can transmit and receive information to and from each other via a bus (not illustrated).

### <Analysis Sequence of Automated Analysis Device>

An operation of each component of the automated analysis device 10 is controlled by the processor 201 of the control device 200. Hereinafter, to facilitate description, each component serves as a subject in description.

First, the cleaning mechanism 112 cleans the reaction container 1. Thereafter, the cleaning mechanism 112 dispenses water (purified water or pure water: referred to as "blank water" in some cases) to the reaction container 1. The photometer measures light transmitted through the reaction container 1 to which water is dispensed and outputs photometric data to the processor 201. The processor 201 calculates absorbance (hereinafter referred to as "water blank absorbance") from the photometric data and stores the photometric data in the storage device 202. Thereafter, the cleaning mechanism 112 sucks water from the reaction container 1 and discards the water to a waste liquid tank (not illustrated). The blank water may be contained in the reagent container 3. Here, instead of the cleaning mechanism 112, the blank water can be dispensed to the reaction container 1 by the reagent dispensing mechanism 110.

Subsequently, the sample dispensing mechanism 109 dispenses the sample in the sample container 2 to the reaction container 1. The reagent dispensing mechanism 110 dispenses the reagent in the reagent container 3 to the reaction container 1 to which the sample is dispensed. The agitation mechanism 111 agitates the sample and the reagent dispensed to the reaction container 1. Accordingly, a reaction liquid in which the sample and the reagent react with each other can be obtained. The photometer measures color development by a chemical reaction of the sample and the reagent in the reaction container 1 at a given time interval determined according to a rotation speed of the reaction disk 101. The processor 201 calculates absorbance of the reaction liquid from the photometric data and stores the absorbance in the storage device 202. The processor 201 corrects the absorbance of the reaction liquid in the reaction container 1 according to the water blank absorbance and calculates concentration of the sample. Since the absorbance changes due to an influence of a defect of the reaction container 1, adhesion of dirt on the reaction container 1, or a change in an amount of light of the light source lamp 104, the water blank absorbance is generally acquired immediately before measurement of the absorbance of the sample.

To promote a chemical reaction, the temperature of the reaction container 1 is constantly maintained by a constant temperature water supply device (not illustrated). After the measurement ends, the cleaning mechanism 112 cleans the reaction container 1. The cleaned reaction container 1 is used to measure a subsequent sample.

As described above, in the automated analysis device 10, the reaction containers 1 are repeatedly used in order of cleaning, measurement of the water blank absorbance, and measurement of absorbance of the sample. The measurement of the water blank absorbance is performed at a timing at which the blank water is dispensed to the reaction container 1 and the reaction container 1 crosses before the photometer through a rotation operation of the reaction disk 101. Since there is no factor changing the absorbance inside the reaction container 1 in the measurement of the water blank absorbance, a stable measurement value can be obtained. Therefore, a state of the light source lamp 104 is suitably confirmed. As the amount of light of the light source lamp 104 increases, the absorbance decreases. When the amount of light decreases, the absorbance increases.

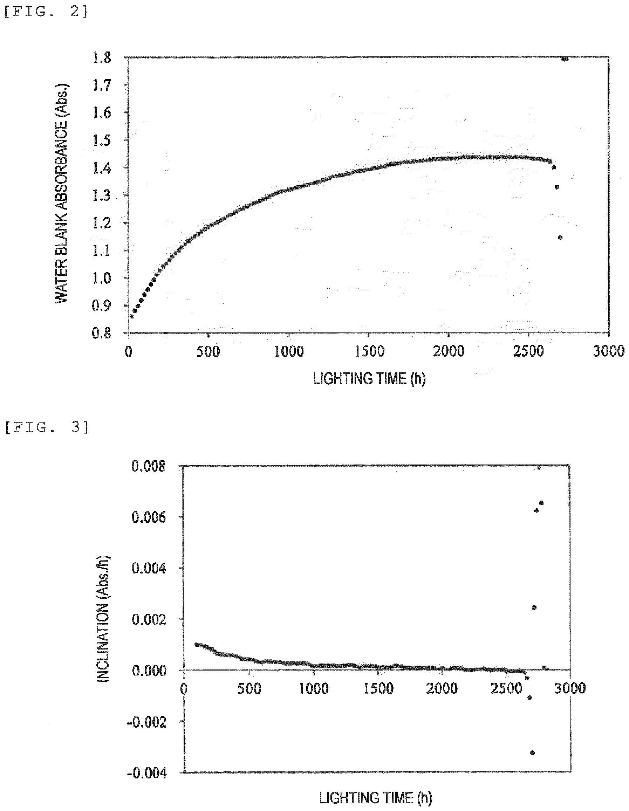

Fig. 2 is a graph illustrating an example of a change in water blank absorbance over time. In the graph of Fig. 2, the horizontal axis represents a lighting time (h) of the light source lamp 104 and the vertical axis represents water blank absorbance. In Fig. 2, absorbance of light with a wavelength of 340 nm measured at intervals of 20 hours using a halogen lamp serving as the light source lamp 104 is plotted. As illustrated in Fig. 2, the water blank absorbance tends to increase from start of lighting (use start of the light source lamp 104 that is a new product). An amount of change in the water blank absorbance over time is largest at the time of use start. As the light source lamp 104 is consumed, the amount of change over time gradually decreases and the water blank absorbance reaches a peak. An amount of increase in the water blank absorbance to the peak and a time until the water blank absorbance reaches the peak differ depending on the light source lamp. Thereafter, the water blank absorbance shifts to a decreasing tendency, and the water blank absorbance sharply rises to a high value at the time of disconnection. The state of the light source lamp 104 becomes unstable immediately before disconnection, and the water blank absorbance fluctuates greatly vertically. The degree of decrease in the water blank absorbance and a time until the disconnection differ depending on the light source lamp.

Fig. 3 is a graph in which an inclination of the graph of Fig. 2 is calculated and plotted. In the graph of Fig. 3, the horizontal axis represents a lighting time (h) of the light source lamp 104 and the vertical axis represents an inclination of the graph of Fig. 2. In Fig. 3, a regression line is applied and an inclination of the regression line is plotted using data corresponding to the past 100 hours from each measurement point of the water blank absorbance. As illustrated in Fig. 3, an inclination of the graph of Fig. 2, that is, an amount of change in the water blank absorbance over time tends to gradually decrease, and then fluctuates greatly vertically, immediately before disconnection. Here, when water blank absorbance that is disordered due to disturbance such as bubbles or dirt of the reaction vessel is measured, a value of an inclination of a certain plot may be larger than a value of an inclination of an immediately previous plot in some cases. Accordingly, depending on situations, an inclination of the graph at any subsequent time may be larger than an inclination of the graph at the time of use start of the light source lamp 104 due to an influence of disturbance. In consideration of this, the inclination of the graph of the water blank absorbance illustrated in Fig. 3 can be said to tend to gradually decrease over the entire period until immediately before the end of the lifespan of the light source lamp 104. In Figs. 2 and 3, the water blank absorbance obtained by measuring light of 340 nm using, for example, a halogen lamp has been described, but the same tendency is observed, for example, even for light with a wavelength of 450 nm or 600 nm.

From Figs. 2 and 3, it can be understood that there are the following two features in the changein absorbance caused due to a change in the amount of light resulting from degradation of the light source lamp 104. The first feature is that there is a tendency in which the amount of change in the absorbance over time is largest at the time of use start and the amount of change in the absorbance over time gradually decreases as the light source lamp 104 degrades, excluding disorder of the absorbance arising immediately before end of the lifespan. The second feature is that disorder of the absorbance arising immediately before end of the lifespan of the light source lamp 104 occurs after a reverse tendency to the tendency of the change in absorbance from use start is shown. For example, as illustrated in Fig. 2, when the absorbance tends to increase from the use start and the lifespan of the light source lamp 104 is approaching the end, the absorbance decreases by several hours. Thereafter, the absorbance immediately before end of the lifespan fluctuates greatly vertically.

Based on such insight, the present inventors have found out that the lifespan of the light source lamp is approaching the end when a decrease in the amount of change in the absorbance over time or a change in the tendency of the change in absorbance in an opposite direction is detected.

### <Method of Determining Lifespan of Light Source Lamp>

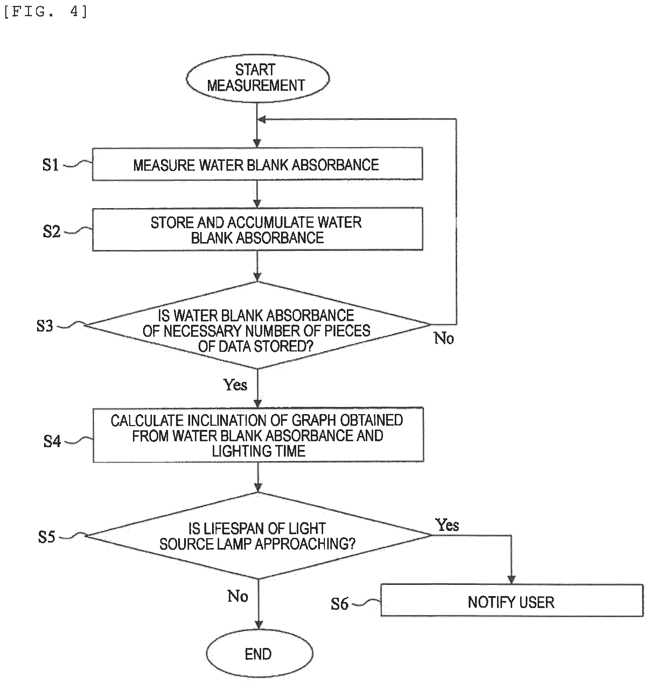

Fig. 4 is a flowchart illustrating a method of determining the lifespan of the light source lamp 104 according to the first embodiment. A process of Fig. 4 is performed by causing the processor 201 to start a light source lamp monitoring program and operate in cooperation with hardware of the automated analysis device 10. The light source lamp monitoring program can be started, for example, when the automated analysis device 10 is turned on. Alternatively, the light source lamp monitoring program may be started when a user inputs an instruction to confirm a state of the light source lamp 104. Alternatively, the light source lamp monitoring program may be started simultaneously with a program for an analysis sequence when the user inputs an instruction to start the analysis sequence.

### (Step S1)

The processor 201 drives the cleaning mechanism 112, dispenses blank water to the reaction container 1, and causes the photometer to measure water blank absorbance. The measurement of the water blank absorbance can be performed as water blank measurement included in the analysis sequence of the automated analysis device 10. Here, it is not necessary to measure new water blank absorbance for executing the light source lamp monitoring program.

### (Step S2)

The processor 201 stores and accumulates the measured water blank absorbance in the storage device 202. Here, the processor 201 stores the measured water blank absorbance in the storage device 202 in association with an accumulated lighting time from the use start of the light source lamp 104. The accumulated lighting time of the light source lamp 104 can be calculated by the processor 201 based on a lighting execution date and a lighting-off execution date of the light source lamp 104 stored in the storage device 202.

### (Step S3)

The processor 201 determines whether the water blank absorbance of the necessary number of pieces of data is stored. When the water blank absorbance of the necessary number of pieces of data is stored (Yes), the process proceeds to step S4. When the water blank absorbance of the necessary number of pieces of data is not stored (No), the process returns to step S1 and the water blank absorbance is measured (step S1) and stored (step S2) repeatedly until the necessary number of pieces of data is accumulated.

### (Step S4)

The processor 201 calculates an inclination of the graph obtained from the water blank absorbance and the lighting time based on the water blank absorbance accumulated in the storage device 202 and the lighting time of the light source lamp 104, and stores the inclination of the graph in the storage device 202.

The inclination can be calculated by applying a straight line or a curve (function) to the graph obtained from the accumulated and stored water blank absorbance and lighting time using, for example, a least squares method or the like. As illustrated in Fig. 2, the change in the absorbance from the lighting start until disconnection of the light source lamp 104 is not linear. Therefore, when a straight line is applied, it is possible to use water blank absorbance in a range of a predetermined lighting time in which latest water blank absorbance is a starting point or water blank absorbance in a range of a predetermined number of pieces of data in which latest water blank absorbance is a starting point. When a curve is applied, all the water blank absorbance from the lighting start may be used. The processor 201 calculates an inclination of the applied straight line or the inclination of the applied curve (derivative or the like) and sets the inclination as an inclination of the graph.

When the number of pieces of water blank absorbance is small and the water blank absorbance is disordered due to disturbance, the value of the inclination calculated in step S4 is easily influenced by the disordered water blank absorbance. Accordingly, by increasing the necessary number of pieces of data determined in the above-described step S3, it is possible to reduce the influence of the disordered water blank absorbance in the calculation of the inclination of the graph.

### (Step S5)

Based on the calculated inclination, the processor 201 determines whether the lifespan of the light source lamp 104 is approaching the end. When the lifespan of the light source lamp 104 is approaching the end (Yes), the process proceeds to step S6. When the lifespan of the light source lamp 104 is not approaching the end (No), the process ends.

Whether the lifespan of the light source lamp 104 is approaching the end can be determined according to whether a tendency of an increase in the water blank absorbance stops (the value of the inclination becomes 0) or whether the water blank absorbance tends to decrease (the value of the inclination becomes negative). That is, when an inclination of 0 is set as a threshold and the inclination becomes 0 or less, it can be determined that the lifespan of the light source lamp 104 is approaching the end.

Since the change in absorbance is small near a peak of the absorbance, the value of the inclination is expected to reciprocate between positive and negative values due to an influence of disturbance such as bubbles or dirt adhered to the reaction container 1. Therefore, when the value of the inclination becomes 0 or less a plurality of times, accuracy of the determination can be improved by determining that the lifespan of the light source lamp 104 is approaching the end. Here, the processor 201 performs step S5 a plurality of times. Thereafter, the step of determining the number of times the inclination becomes 0 or less is executed. When the inclination becomes 0 or less a predetermined number of times, the process proceeds to step S6. When the inclination does not become 0 or less a predetermined number of times, the process ends.

The threshold used to determine the lifespan of the light source lamp 104 may not necessarily be 0. For example, when the light source lamp 104 is desired to be used until immediately before the end of the lifespan, the threshold may be set to a value less than 0. When the light source lamp 104 is desired to be exchanged while the degree of consumption is small, the threshold can be set to a value greater than 0. When a user is desired to be notified earlier that the lifespan of the light source lamp 104 is approaching the end, the threshold can also be set to a value greater than 0.

In the embodiment, the wavelength in which the absorbance increases from lighting start of the light source lamp 104 and decreases afterward has been described as an example, but the change in the absorbance may move reversely depending on the wavelength. That is, depending on the wavelength, the absorbance tends to decrease from the lighting start and shifts to the tendency of the increase afterward. Here, the process from steps S1 to S4 is performed similarly. In the determination of step S5, it is determined that the lifespan of the light source lamp 104 is approaching the end according to whether a tendency of a decrease in the water blank absorbance stops (the value of the inclination becomes 0) or whether the water blank absorbance tends to increase (the value of the inclination becomes positive), that is, whether the absorbance is 0 or more.

### (Step S6)

The processor 201 notifies of the user by generating a warning (alarm information) indicating that the lifespan is approaching the end and outputting the warning to the output device 203. Here, for example, text "Lifespan of light source lamp is approaching the end", text "Please exchange light source lamp", or the like can be included in a notification screen to be displayed on a display or output from a speaker by voice.

The processor 201 may have a function of recording the generated alarm information in the storage device 202 along with the measured water blank absorbance and referring to the accumulated data later. Accordingly, details representing how the absorbance became abnormal can be analyzed from the measurement data. As a result, it is possible to achieve an improvement in measurement reliability. The accumulated data may be transmitted to a service base via a communication line and a state of the automated analysis device 10 may be monitored in the service base. Accordingly, it is possible to take countermeasures such as an instruction for maintenance or exchange of a component at an early stage, and thus reliability of the automated analysis device 10 is improved.

### <Modified Example of First Embodiment>

The process of Fig. 4 is described to be performed by the processor 201 of the control device 200 connected to the device body 100 of the automated analysis device 10. Alternatively, only control of an operation of the device body 100 may be performed by the control device 200 and the process of Fig. 4 may be performed by another control device capable of communicating with the control device 200.

In Fig. 4, an example has been described in which the water blank absorbance measured in the state in which the blank water is contained in the reaction container 1 is used to determine the lifespan of the light source lamp 104. Alternatively, absorbance measured in a state in which the reaction container 1 is empty may be used or absorbance measured in a state in which a specific reagent liquid is contained may be used. For such absorbance, a result actually used in the analysis sequence may be used or absorbance may be newly acquired to determine the lifespan of the light source lamp 104. Instead of the absorbance of light transmitted through the reaction container 1, absorbance of light passing through a gap between the adjacent reaction containers 1 may be used. Since the absorbance measured in the gap of the reaction containers 1 is not influenced by a defect or dirt of the reaction container 1 and bubbles inside the reaction container 1, there is an advantage that a change in the absorbance of the light source lamp 104 can be understood more easily than the water blank absorbance.

The wavelength used to determine the lifespan of the light source lamp 104 is not particularly limited. However, the change in the absorbance due to degradation of the light source lamp 104 tends to be easily seen, for example, on a short-wavelength side such as 340 nm. Therefore, by measuring the change in the absorbance of a short wavelength, it is possible to determine the lifespan of the light source lamp 104 more accurately.

The inclination of the graph obtained from the water blank absorbance and the lighting time may be calculated for each wavelength, or water blank absorbance may be acquired from a plurality of wavelengths and may be calculated based on a difference in the absorbance between a plurality of wavelengths. By using a difference in the water blank absorbance of simultaneously measured different wavelengths, it is possible to reduce an influence of waste floating on the circulating water of the reaction vessel, bubbles adhered to the reaction container 1, or the like. A wavelength measured in the measurement of the water blank absorbance mostly depends on an analysis item of a subsequently measured sample. By performing a setting such that an inclination is calculated with a plurality of wavelengths, it is possible to avoid a situation in which sufficient number of pieces of data does not gather and determination is stopped.

In general, the automated analysis device uses the plurality of reaction containers 1. Therefore, the acquired water blank absorbance is not acquired from a single reaction container 1. In the calculation of the inclination, the water blank absorbance acquired from the plurality of reaction containers 1 may be used as long as the water blank absorbance was measured at the same wavelength. The inclination may be calculated for each reaction container 1 as long as the number of pieces of data necessary for determination can be acquired. The water blank absorbance stored in the storage device 202 may be used to calculate the inclination as it is, and an average value, a median value, or the like of a plurality of pieces of water blank absorbance may be calculated and then used to calculate the inclination.

Not all of the acquired water blank absorbance may be used and an exclusion condition may be defined. For example, the light source lamp 104 is turned on once from a turned-off state immediately after start of the automated analysis device 10 or immediately after exchange of the circulating water of the reaction vessel. Therefore, it takes time for an amount of light to be stabilized when the light source lamp 104 is turned on again, and there is concern of the amount of light being unstable. Accordingly, by performing a setting such that photometric data measured within a predetermined time immediately after start of the automatic analysis device 10 or after exchange of the circulating water is not used to calculate the inclination, it is possible to prevent erroneous determination of the lifespan of the light source lamp 104. When the reaction container 1 becomes dirty due to a reaction liquid or when bubbles are adhered, the measured absorbance deviates from the previously measured absorbance. In many automated analysis devices, the processor 201 determines whether there is deviation of the absorbance and performs control such that the abnormal reaction container 1 is not used for analysis. When the processor 201 determines whether there is deviation of the absorbance, absorbance seen to be deviated may be excluded from an inclination calculation target. A reference for determining absorbance which is not a calculation target may be newly defined. For example, the absorbance greatly deviated from the absorbance estimated from the above-described regression straight line or regression curve can be excluded from the inclination calculation target.

A wavelength used to determine the lifespan of the light source lamp 104 or the foregoing conditions such as the exclusion condition of the measured water blank absorbance may be embedded in the light source lamp monitoring program or may be set by the user.

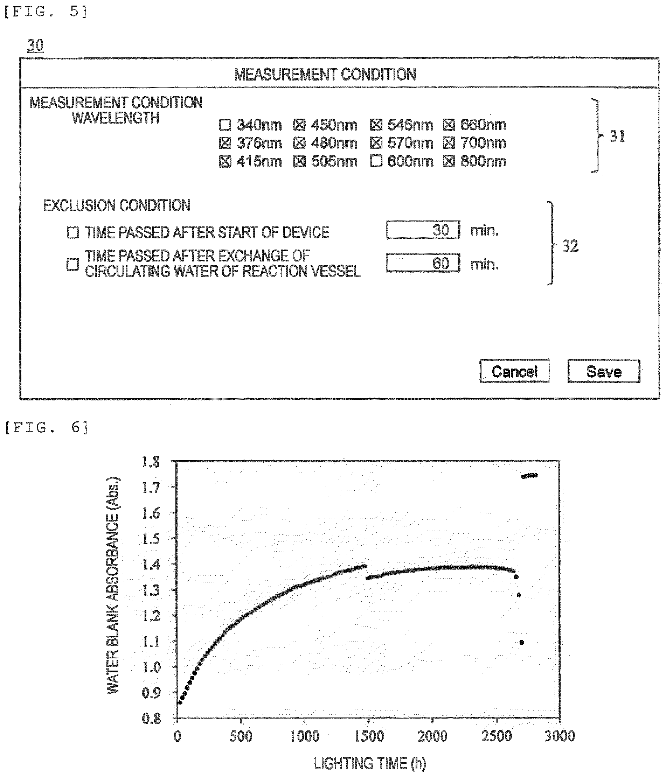

Fig. 5 is a diagram illustrating an example of a measurement condition setting screen 30 (GUI screen) for setting conditions of the determination of the lifespan of the light source lamp 104. The measurement condition setting screen 30 includes a measurement condition setting portion 31 and an exclusion condition setting portion 32. In the measurement condition setting portion 31, wavelengths which can be measured by the photometer are listed, and a wavelength by which a measurement result of the water blank absorbance is used to calculate the inclination can be selected. In the exclusion condition setting portion 32, the water blank absorbance to be excluded from the calculation of the inclination can be set. In the example of Fig. 5, a time passed after start of the automated analysis device 10 and a time passed after exchange of the circulating water of the reaction vessel can be designated. The water blank absorbance acquired at the time designated by the exclusion condition setting portion 32 is not used to calculate the inclination of the graph.

### <Deviation of Absorbance by Maintenance>

When maintenance work such as cleaning of the reaction vessel or exchange of the reaction container 1 is performed, a measurement environment differs before and after maintenance. Therefore, the absorbance is shifted toward a high value or a low value. Hereinafter, a method of determining a lifespan in consideration of deviation in absorbance by maintenance will be described.

Fig. 6 is a graph illustrating an example of a change in water blank absorbance over time when maintenance work is performed at a lighting time of 1500 hours. As illustrated in Fig. 6, the absorbance is shifted toward a low value at a lighting time of 1500 hours. The deviation of the absorbance is caused by a change in the measurement environment and is not caused by a change of the degree of consumption of the light source lamp 104. Since a rate of change (inclination) in the absorbance depends on the degree of consumption of the light source lamp 104, the rate of change (inclination) before and after maintenance can be expected to be substantially the same.

When the inclination is calculated based on data before and after maintenance without considering the deviation in the absorbance by the maintenance, there is concern of the degree of consumption of the light source lamp 104 not being able to be determined correctly. A method of calculating the inclination of the graph using only the data acquired after maintenance can also be considered. However, the degree of consumption of the light source lamp 104 cannot be determined until a necessary number of pieces of data gathers. Therefore, a deviation amount of the absorbance by the maintenance is calculated and corrected using the absorbance immediately before and after the maintenance. The deviation of the absorbance by the maintenance can be corrected by calculating a difference between the water blank absorbance immediately before the maintenance and the water blank absorbance immediately after the maintenance and adding or subtracting the difference. The processor 201 can determine whether the maintenance was performed using a maintenance execution signal transmitted from the processor 201 or a maintenance execution signal instructed through the GUI screen by the user as a trigger.

However, in some automated analysis devices, information regarding whether the device performed maintenance is not retained in some cases. For example, there is a case in which maintenance is performed while the automated analysis device 10 is turned off. Here, it is necessary to separately determine whether the deviation in the absorbance occurs separately from the determination of the lifespan of the light source lamp 104. As described above, it is expected that the rate of change (inclination) in the absorbance is substantially the same before and after the maintenance. Therefore, when the deviation in the absorbance is detected and it can be detected that the inclinations are substantially the same, it can be determined that the maintenance was performed. For the deviation in the absorbance, a method of estimating the absorbance in the lighting time in which the latest absorbance is acquired based on the regression straight line or the regression curve obtained in the previous lifespan determination flow and comparing the estimated value with actually measured latest absorbance can be exemplified. Alternatively, when a difference in the lighting time is small, the deviation in the absorbance can be detected by comparing the latest absorbance with the previous absorbance. As the method of determining whether the inclinations are substantially the same, there is a method of calculating inclinations before and after detection of the deviation in the absorbance, respectively, and comparing the calculated values. When the inclinations are substantially the same, it may be determined that a change is not made due to abnormality of the light source lamp 104 and the deviation amount may be corrected. When the inclinations are not substantially the same, it may be considered that the state of the device is unstable due to abnormality of the light source lamp 104 or other factors, and then the device may be stopped or the user may be notified of the abnormality. When the inclination is changed toward a high value, a reason such as an unstable state of the light source lamp 104 before disconnection or exchange of the light source lamp 104 is considered. When the reason is the exchange of the light source lamp 104, it is normal that the inclination is a high value. Therefore, when the inclination is a high value, it is possible to prevent the device from being stopped unnecessarily by allowing the user to confirm whether the light source lamp 104 was exchanged through the GUI. The inclination for determining the deviation in the absorbance may be calculated with a smaller number of pieces of data than in the determination of the lifespan of the light source lamp 104 or the same number of pieces of data.

### <Conclusion of First Embodiment>

As described above, the automated analysis device according to the first embodiment includes the light source lamp 104, the sensor 106 (optical detector) that detects light emitted from the light source lamp 104, and the processor 201 (control device) that processes a detection signal of the sensor 106 and calculates absorbance. The processor 201 acquires a change in the absorbance over time and determines that the lifetime of the light source lamp 104 is approaching the end when a tendency of the change in the absorbance over time is changed. The change in the tendency of the change in the absorbance over time can be detected by comparing an inclination of a graph obtained from the absorbance and a lighting time of the light source lamp with a predetermined threshold. As described above, there is a tendency in which the amount of change in the absorbance over time is largest at the time of use start and the amount of change in the absorbance over time gradually decreases as the light source lamp degrades, excluding disorder of the absorbance arising immediately before end of the lifespan. There is a feature in which disorder of the absorbance arising immediately before end of the lifespan of the light source lamp 104 occurs after a reverse tendency to the tendency of the change in absorbance from use start is shown. Accordingly, by monitoring the tendency of the change in the absorbance over time as in the first embodiment, it is possible to detect that the lifespan of the light source lamp 104 is approaching the end before reaching an unstable state in which the amount of light of the light source lamp 104 greatly changes.

According to the embodiment, since whether the lifespan is approaching the end can be detected according to the degree of consumption of the individual light source lamp 104, it is possible to determine an appropriate exchange time of the individual light source lamp 104. Accordingly, it is possible to reduce a burden on exchange work of the user. Since the light source lamp 104 of which the lifespan is not approaching the end is not exchanged, it is possible to reduce cost of the light source lamp 104 and reduce an environment burden.

### [Second Embodiment]

In the above-described first embodiment, when it is determined that the life of the light source lamp 104 is approaching the end, the user is notified such that the user is prompted to exchange the light source lamp 104. In a second embodiment, a technology for estimating a lifespan of the light source lamp 104 and notifying a user of an exchange time in advance will be proposed.

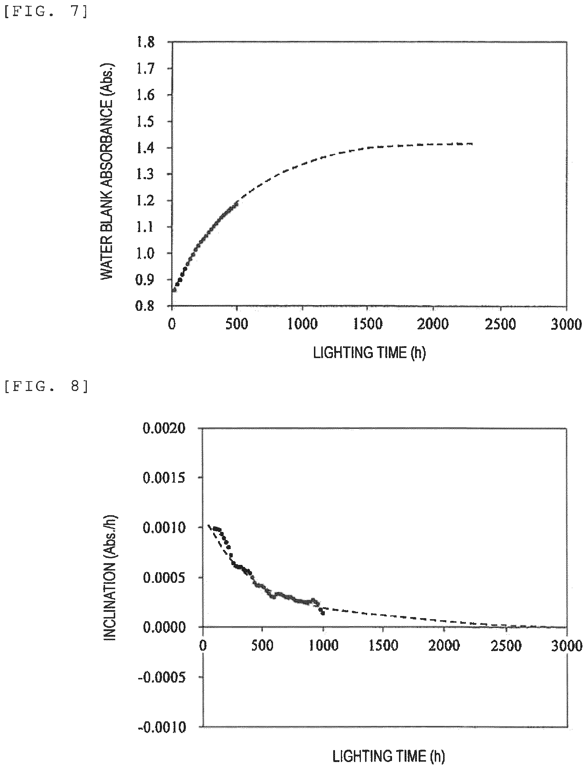

Fig. 7 is a graph illustrating an example of a change in water blank absorbance over time. In Fig. 7, water blank absorbance until a lighting time of 500 hours is measured and a curve obtained through curve fitting on plots until 500 hours is indicated as a dotted line. As such, it is possible to estimate a change in the water blank absorbance over time after 500 hours by the curve fitting.

Fig. 8 is a graph illustrating an inclination of the graph of Fig. 7 that is calculated and plotted. In Fig. 8, a curve obtained through curve fitting on plots of an inclination of a graph until a lighting time of 1000 hours is indicated as a dotted line. As such, it is possible to estimate a change in the inclination of the graph after 1000 hours by the curve fitting, and thus it is possible to estimate a lighting time in which the inclination reaches a predetermined threshold, that is, a lighting time in which the lifespan of the light source lamp 104 approaches the end.

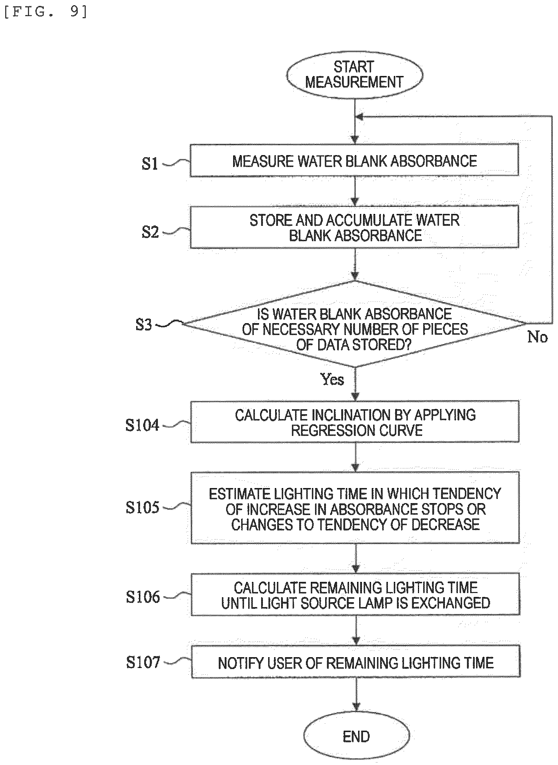

Fig. 9 is a flowchart illustrating a method of determining a lifespan of the light source lamp 104 according to a second embodiment. Since steps S1 to S3 are the same as those of the first embodiment, description thereof will be omitted. After step S3, steps S104 to S107 are performed.

### (Step S104)

The processor 201 calculates an inclination of a regression curve by applying a regression curve to the plots of the acquired water blank absorbance.

### (Step S105)

The processor 201 estimates a lighting time in which a tendency of an increase in the water blank absorbance stops (the value of the inclination becomes 0) or a lighting time in which the water blank absorbance changes from the increase tendency to the decrease tendency (the value of the inclination becomes negative) based on the inclination of the regression curve. That is, the inclination of 0 is set as a threshold and a lighting time in which the inclination becomes 0 or less is estimated. As in the first embodiment, the threshold of the inclination is not limited to 0 and can be appropriately changed depending on situations.

### (Step S106)

The processor 201 calculates a remaining time until the estimated lighting time (remaining lighting time) based on the lighting time estimated in step S105 and a current lighting time. The remaining lighting time is remaining time until the lifespan of the light source lamp 104 approaches the end and the light source lamp 104 is exchanged.

### (Step S107)

The processor 201 notifies the user by generating a notification including the remaining lighting time and outputting the notification to the output device 203. Here, for example, text "Exchange time of light source lamp is X days later" can be included on a warning screen to be displayed on a display or output from a speaker by voice.

### <Notification of Exchange Time>

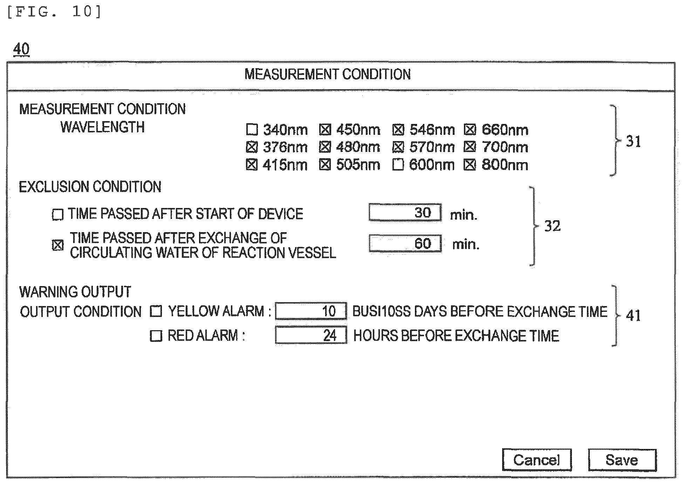

Fig. 10 is a diagram illustrating an example of a measurement condition setting screen 40 (GUI screen) according to the second embodiment. The measurement condition setting screen 40 includes the measurement condition setting portion 31, the exclusion condition setting portion 32, and a warning output setting portion 41. Since the measurement condition setting portion 31 and the exclusion condition setting portion 32 are the same as those of the first embodiment (Fig. 5), description thereof will be omitted. In the warning output setting portion 41, the user can set how many business days and hours before the estimated remaining lighting time (exchange time) the warning screen is displayed on the display (the output device 203). A plurality of timings at which the warning screen is output can be set. As such, by notifying the user of the exchange time earlier than the estimated exchange time of the light source lamp 104, the user can plan a timing of the exchange work without interrupting measurement which is being performed. Accordingly, it is possible to prevent a sample or a reagent from being lost due to interruption of measurement.

### <Conclusion of Second Embodiment>

As described above, in the second embodiment, the processor 201 fits the function (regression curve) to the graph obtained from the absorbance and the lighting time of the light source lamp, calculates the lighting time of the light source lamp of which the inclination of the fitted function reaches the predetermined threshold before the inclination reaches the predetermined threshold, and estimates the lighting time in which the lifespan of the light source lamp approaches the end. According to the second embodiment, it is possible to plan the exchange time of the light source lamp in advance.

### [Third Embodiment]

In the above-described first and second embodiments, the technologies for determining the lifespan of the light source lamp 104 based on the inclination of the graph obtained from the lighting time of the light source lamp 104 and the water blank absorbance have been described. However, when the water blank absorbance is disordered, accuracy of the value of the calculated inclination may deteriorate. There are several kinds of causes that the water blank absorbance becomes unstable, and a method of solving each cause differs. Thus, the lifespan of the light source lamp may be determined based on a past operation history of the automated analysis device. Accordingly, the lifespan of the light source lamp 104 can be determined more accurately. Therefore, in a third embodiment, a technology for estimating the lifespan of the light source lamp 104 by machine learning will be proposed.

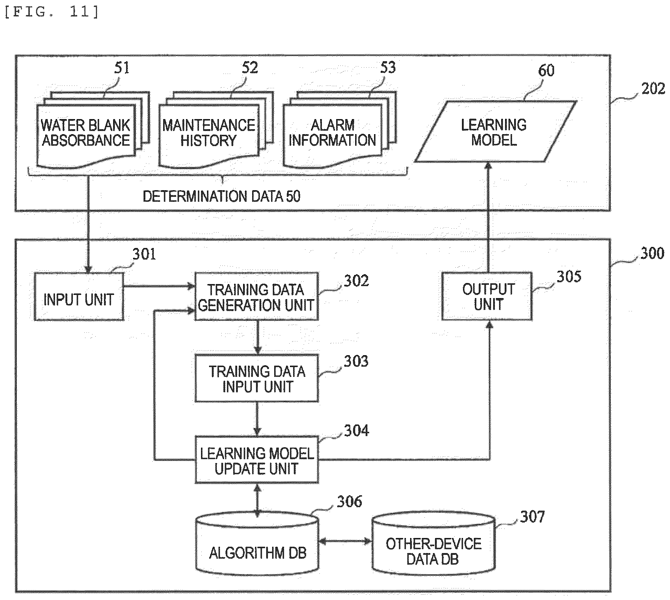

Fig. 11 is a functional block diagram illustrating a learning device 300 according to the third embodiment. The learning device 300 is configured to be able to transmit and receive data to and from the storage device 202 of the control device 200. A physical configuration of the learning device 300 may be, for example, a configuration of a single server or a single general-purpose computer, or may be a configuration of a plurality of servers of which any portions of a processing device (processor) and a storage device are connected via a network. A function of the learning device 300 is implemented by causing the processing device to execute a program stored in the storage device. Functions equivalent to some or all of the functions configured as software may be implemented by hardware such as a field programmable gate array (FPGA) or an application specific integrated circuit (ASIC).

As illustrated in Fig. 11, the storage device 202 stores determination data 50 and a learning model 60. The determination data 50 includes water blank absorbance 51, and a maintenance history 52 and alarm information 53 of the automated analysis device 10. The determination data 50 may include index data (for example, the above-described threshold, the calculated inclination, an accumulated lighting time of the light source lamp 104, a measurement wavelength, and the like) related to the determination of the lifespan of the light source lamp 104. The processor 201 (not illustrated in Fig. 11) outputs the determination data 50 stored in the storage device 202 to the learning device 300. The learning model 60 is used for the processor 201 to determine the lifespan of the light source lamp 104. The learning model 60 is generated and updated by the learning device 300.

The learning device 300 includes an input unit 301, a training data generation unit 302, a training data input unit 303, a learning model update unit 304, an output unit 305, an algorithm database 306, and an other-device data database 307.

The input unit 301 receives the determination data 50 from the control device 200. The input unit 301 outputs the acquired determination data 50 to the training data generation unit 302. The training data generation unit 302 generates training data from the determination data 50. The training data input unit 303 inputs the training data generated by the training data generation unit 302 to the learning model update unit 304. The learning model update unit 304 updates the learning model 60 using the training data. The output unit 305 transmits the learning model 60 updated by the learning model update unit 304 to the control device 200. The processor 201 stores the updated learning model 60 in the storage device 202 and determines the lifespan of the light source lamp 104 using the updated learning model 60.

The original of the learning model 60 is accumulated in the algorithm database 306. To improve accuracy of the learning model, it is necessary to perform learning using training data as many as possible. Therefore, training data of determination data collected from other automated analysis devices is stored in the other-device data database 307. The learning model accumulated in the algorithm database 306 is generated based on the training data from the other-device data database 307. The learning model update unit 304 updates the learning model 60 and feeds changed information back to the training data generation unit 302 when the algorithm of the learning model 60 is changed. The training data generation unit 302 updates a training data generation condition based on the feed-back from the learning model update unit 304.

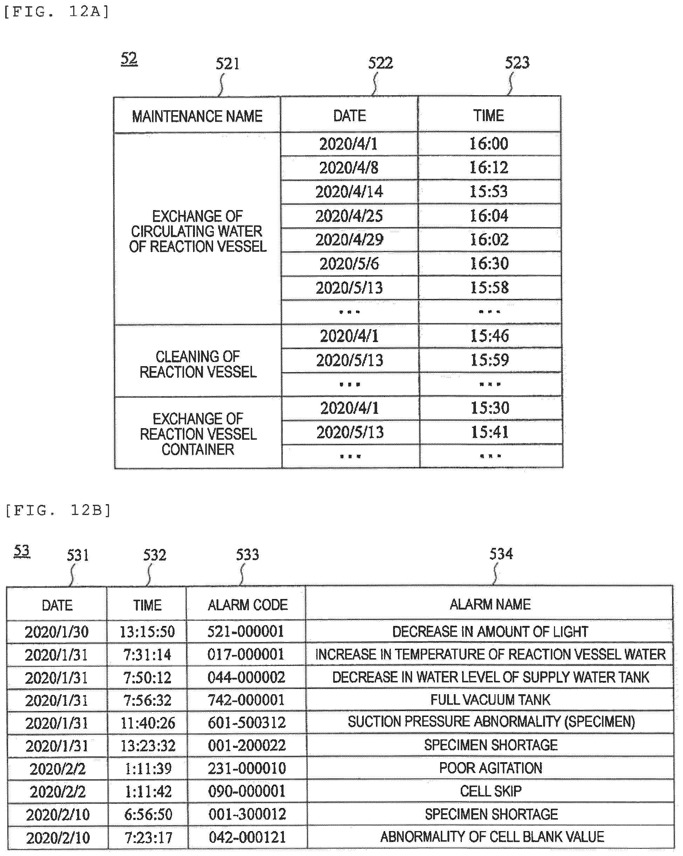

Fig. 12A is a diagram illustrating an example of data included in the maintenance history 52. The maintenance history 52 includes, as data items, an implemented maintenance name 521, and a date 522 and a time 523 at which the maintenance is performed. As the maintenance name 521, exchange of the circulating water of the reaction vessel, cleaning of the reaction vessel, and exchange of a reaction vessel container are exemplified, but the types of maintenance are not limited thereto.

Fig. 12B is a diagram illustrating an example of data included in the alarm information 53. The alarm information 53 includes, as data items, a date 531 and a time 532 when the processor 201 of the automated analysis device 10 issues an alarm, an alarm code 533, and an alarm name 534. The alarm code 533 is random identification number assigned to an alarm when the processor 201 generates the alarm. As the alarm name 534, decrease in amount of light, increase in temperature of reaction vessel water, decrease in water level of supply water tank, full vacuum tank, suction pressure abnormality (specimen), specimen shortage, poor agitation, cell skip, and abnormality of cell blank value can be exemplified. The processor 201 can also generate other alarms depending on a running situation of the automated analysis device 10.

As the learning model 60, for example, any learning device such as a neural network, a regression tree, or a Bayesian classifier can be used.

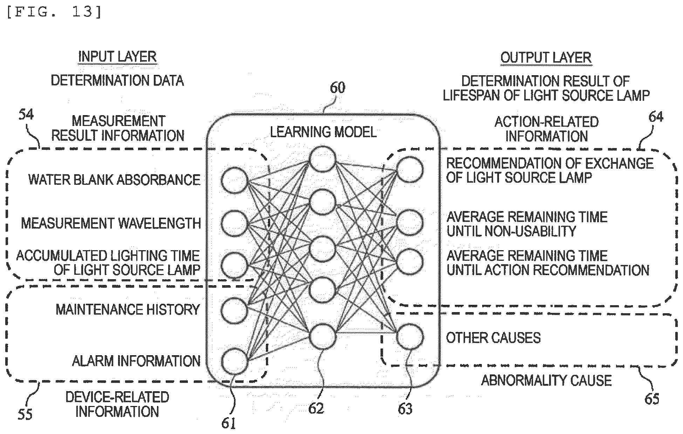

Fig. 13 is a diagram illustrating an example of the learning model 60 by a neural network. The learning model 60 includes an input layer 61, an intermediate layer 62, and an output layer 63. Information (determination data or processed data thereof) input to the input layer 61 propagates in the intermediate layer 62 and further propagates in order in the output layer 63. An inference result (a determination result of the lifespan of the light source lamp 104) based on the information input to the input layer 61 is output from the output layer 63. In general, there are a plurality of intermediate layers in a neural network. In Fig. 13, one intermediate layer 62 is illustrated as a representative. Each of the input layer 61, the intermediate layer 62, and the output layer 63 includes pluralities of input units, intermediate units, and output units, respectively. Information input to each input unit of the input layer 61 is weighted according to a coupling coefficient between the input unit and the intermediate unit to be input to each intermediate unit. A value of the intermediate unit of the intermediate layer 62 is calculated by adding the value from the input unit. An output from each intermediate unit of the intermediate layer 62 is weighted according to a coupling coefficient between the intermediate unit and the output unit to be input to each output unit. A value of the output unit of the output layer 63 is calculated by adding the value from the intermediate unit. As such, the process in the intermediate layer 62 corresponds to a process of performing nonlinear conversion on the value of the input data input to the input layer 61 and outputting the converted value as output data of the output layer 63.

The determination data input to the input layer 61 can be classified into, for example, measurement result information 54 and device-related information 55. The measurement result information 54 includes, for example, water blank absorbance, a measurement wavelength, and an accumulated lighting time of the light source lamp. The device-related information 55 includes, for example, a maintenance history and alarm information. The maintenance history includes, for example, operations such as exchange of water of the reaction vessel, cleaning of the reaction vessel, exchange of the reaction container 1, and cleaning of the reaction container 1, all of which can influence the water blank absorbance. The alarm information includes alarms of various levels. There is a level in which immediate maintenance is necessary to cancel the alarm, a cautious level in which immediate maintenance is not necessary but observation is necessary, or the like.

The inference result output from the output layer 63 can be classified into, for example, action-related information 64 and an abnormality cause 65. The action-related information 64 is information regarding an action of the user related to the light source lamp 104 and includes, for example, recommendation of exchange of the light source lamp 104, an average remaining time until non-usability, and an average remaining time until action recommendation. An output value of the action-related information 64 is a probability value and is determined according to whether the output probability value is equal to or greater than a predetermined threshold or less than the predetermined threshold. The average remaining time until non-usability is an estimated remaining lighting time until absorbance reaches an unstable state before disconnection of the light source lamp 104. The average remaining time until the action recommendation is an estimated remaining light time until the light source lamp 104 reaches a level at which exchange is recommended.

The abnormality cause 65 is, for example, information suggesting that an abnormal value of the absorbance occurs due to a cause other than the light source lamp 104, such as dirt of the reaction vessel or dirt of the reaction container 1. The user can determine whether it is necessary to exchange the light source lamp 104 based on the output action-related information 64 and abnormality cause 65.

The input data and the output data illustrated in Fig. 13 are merely exemplary and may include other types of data.

For example, instead of step S5 (see Fig. 4) described in the first embodiment or steps S105 and S106 (see Fig. 9) described in the second embodiment, the processor 201 can perform the determination of the lifespan of the light source lamp 104 by the above-described learning model 60. Thereafter, the processor 201 generates a notification or a warning for the user based on the action-related information 64 and the abnormality cause 65 output from the learning model 60 and outputs the notification or the warning to the output device 203 (for example, a display).

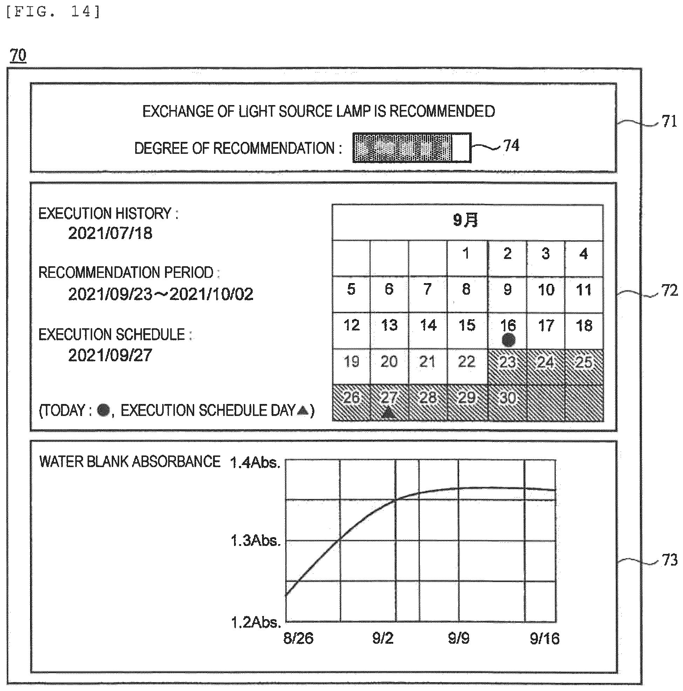

Fig. 14 is a diagram illustrating an example of a recommended action display screen 70 displayed on a display. In Fig. 14, a case in which exchange of the light source lamp 104 is recommended is illustrated. The recommended action display screen 70 includes a recommended action display portion 71, a recommended execution time display portion 72, and a reference information display portion 73. In the recommended action display portion 71, a name of a recommended action and the degree of recommendation are displayed. As a hatching portion of a bar 74 is larger, the degree of recommendation is greater.

In the recommended execution time display portion 72, a past execution history of the exchange of the light source lamp 104, an recommendation period of the exchange of the light source lamp 104, and an execution schedule day of the exchange of the light source lamp 104 are displayed. A period in which exchange of the light source lamp 104 is recommended is indicated by hatching in a calendar, a black circle indicates today, and a black triangle indicates an execution schedule day of the action. The past execution history of the exchange of the light source lamp 104 is generated based on the maintenance history 52 stored in the storage device 202. The recommendation period of the exchange of the light source lamp 104 is generated based on an average remaining time until action recommendation is output from the learning model 60. The execution schedule day of the exchange of the light source lamp 104 can be determined when the user sets in advance how many business days before expiration of the recommendation period the light source lamp 104 is to be exchanged. Alternatively, the exchange execution schedule day can be determined when the user clicks a day in the calendar.

In the reference information display portion 73, data with high importance for determining whether a predetermined recommended action is necessary, for example, a history of the water blank absorbance, can be displayed. Accordingly, it can be confirmed whether a recommended action is appropriate based on an experience of the user even when the user does not collect data again.

### <Conclusion of Third Embodiment>

As described above, in the third embodiment, the storage device 202 stores the learning model 60 that is trained using training data for which information regarding the change in the absorbance over time and information regarding maintenance of the automated analysis device 10 is input and a lifespan of the light source lamp 104 is output. The processor 201 inputs the acquired information regarding the change in the absorbance over time and the acquired information regarding maintenance of the automated analysis device 10 to the learning model 60 and causes the learning model 60 to output a value related to the lifespan of the light source lamp 104. As such, whether the change in the tendency of the absorbance is caused from the light source lamp 104 or a cause other than the light source lamp 104 can be determined by machine learning according to the change in the absorbance over time and relevance with the maintenance. Accordingly, it is possible to prevent erroneous determination of the lifespan of the light source lamp 104 and determine the lifespan of the light source lamp 104 accurately.

### [Modified Example]

The present disclosure is not limited to the above-described embodiments and includes various modified examples. For example, the above-described embodiments have been described in detail to easily describe the present disclosure, and not all the described configurations may necessarily be included. Some of certain embodiments may be replaced with other embodiments. Other embodiments may be added to the configurations of some embodiments. For the configurations of some embodiments, the configurations of the other embodiments may be added, deleted, or replaced.

### Reference Signs List

- 1:: reaction container
- 2:: sample container
- 3:: reagent container
- 10:: automated analysis device
- 100:: device body
- 101:: reaction disk
- 102:: sample disk
- 103:: reagent disk
- 104:: light source lamp
- 105:: spectroscopic diffraction grating
- 106:: sensor (optical detector)
- 107:: reaction container reception unit
- 108:: transport device
- 109:: sample dispensing mechanism
- 110:: reagent dispensing mechanism
- 111:: agitation mechanism
- 112:: cleaning mechanism
- 200:: control device
- 201:: processor
- 202:: storage device
- 203:: output device
- 204:: input device
- 300:: learning device

## Claims

1. An automated analysis device comprising:
a light source lamp;
an optical detector configured to detect light emitted from the light source lamp; and
a control device configured to process a detection signal of the optical detector and calculate absorbance of the light, wherein
the control device
acquires a change in the absorbance over time, and
determines that a lifespan of the light source lamp is approaching the end when a tendency of the change in the absorbance over time changes.

2. The automated analysis device according to claim 1, wherein
the control device
calculates an inclination of a graph obtained from the absorbance and a lighting time of the light source lamp, and
detects a change in the tendency of the change in the absorbance over time by comparing the inclination with a predetermined threshold.

3. The automated analysis device according to claim 2, wherein
the control device
determines that, when the absorbance tends to increase from start of lighting of the light source lamp, the tendency of the change in the absorbance over time changes as the inclination becomes equal to or less than the predetermined threshold, and
determines that, when the absorbance tends to decrease from start of lighting of the light source lamp, the tendency of the change in the absorbance over time changes as the inclination becomes equal to or greater than the predetermined threshold.

4. The automated analysis device according to claim 2, wherein
the control device
fits a function to the graph, and
calculates the inclination based on the fitted function.

5. The automated analysis device according to claim 4, wherein the control device calculates a lighting time of the light source lamp in which the inclination of the fitted function reaches the predetermined threshold before the inclination reaches the predetermined threshold and estimates the lighting time in which the lifespan of the light source lamp is approaching the end.

6. The automated analysis device according to claim 1, wherein the control device generates a notification for prompting a user to exchange the light source lamp and outputs the notification to an output device when the control device determines that the lifespan of the light source lamp is approaching the end.

7. The automated analysis device according to claim 5, wherein the control device generates a notification for prompting a user to exchange the light source lamp earlier than the estimated lighting time in which the lifespan of the light source lamp approaches the end.

8. The automated analysis device according to claim 7, wherein the control device generates a GUI screen configured to be able to set a timing at which the notification is output to the output device and outputs the GUI screen to the output device.

9. The automated analysis device according to claim 1, further comprising:
a storage device configured to store a learning model that is trained using training data for which information regarding the change in the absorbance over time and information regarding maintenance of the automated analysis device is input and a lifespan of the light source lamp is output, wherein
the control device inputs the acquired information regarding the change in the absorbance over time and the acquired information regarding maintenance of the automated analysis device to the learning model and causes the learning model to output a value related to the lifespan of the light source lamp.

10. The automated analysis device according to claim 9, wherein the information regarding the change in the absorbance over time includes a change in the absorbance over time and a lighting time of the light source lamp.

11. The automated analysis device according to claim 9, wherein the information regarding maintenance of the automated analysis device includes a maintenance history of the automated analysis device and an alarm history of the automated analysis device.

12. The automated analysis device according to claim 9, wherein the value related to the lifespan of the light source lamp output by the learning model includes at least one of the degree of recommendation of the light source lamp, an average remaining time until the light source lamp is unusable, and an average remaining time until a recommendation time of exchange of the light source lamp.

13. The automated analysis device according to claim 1, wherein the control device determines by using the change in the absorbance over time acquired after a predetermined time passes from start of the automated analysis device.

14. A method of determining a lifespan of a light source lamp executed by a control device connected to an automated analysis device including the light source lamp and an optical detector detecting light emitted from the light source lamp, the method comprising:
receiving a detection signal of light detected by the optical detector by the control device;
calculating absorbance based on the detection signal by the control device;
acquiring a change in the absorbance over time by the control device; and
determining that a lifespan of the light source lamp is approaching the end by the control device when a tendency of the change in the absorbance over time changes.
